(19) **Europäisches Patentamt**

**European Patent Office**

**Office européen des brevets**

(11) **EP 1 189 126 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(51) Int Cl.:
*G05B 23/02* (2006.01)          *G05B 17/02* (2006.01)

(21) Anmeldenummer: **01810783.9**

(22) Anmeldetag: **15.08.2001**

(54) **Verfahren zum Überwachen einer Anlage**

Method for monitoring an installation

Procédé de surveillance d'une installation

(84) Benannte Vertragsstaaten:
**AT BE CH CY DE DK ES FI FR GB GR IE IT LI LU MC NL PT SE TR**

(30) Priorität: **14.09.2000 EP 00810829**

(43) Veröffentlichungstag der Anmeldung:
**20.03.2002 Patentblatt 2002/12**

(73) Patentinhaber: **Sulzer Markets and Technology AG**
**8401 Winterthur (CH)**

(72) Erfinder:
• **Voser, Alexandre**
**8032 Zürich (CH)**
• **Güttinger, Heinz**
**8200 Schaffhausen (CH)**

(74) Vertreter: **Sulzer Management AG**
**KS/Patente/0007**
**Zürcherstrasse 12**
**8401 Winterthur (CH)**

(56) Entgegenhaltungen:
**EP-A- 0 537 041          EP-A- 0 809 162**
**EP-A- 0 895 197          DE-A- 19 635 033**

**Beschreibung**

Die Erfindung betrifft ein Verfahren zum Überwachen einer Anlage mit mehreren Subsystemen gemäss dem Oberbegriff des unabhängigen Anspruchs.

Anlagen wie beispielsweise Wasser- oder Gasturbinen mit nachgeschalteten Generatoren zur Erzeugung elektrischer Energie in Kraftwerken, Turbo- und Kolbenkompressoren zur Verdichtung von Gasen, Pumpenanlagen oder Flugtriebwerke sind typischerweise recht komplexe Systeme, die häufig an verschiedenen Arbeitspunkten arbeiten und deren jeweiliger Betriebszustand durch eine grosse Anzahl von Prozessgrössen beeinflusst wird. Es ist in der Regel notwendig, den Zustand solcher Anlagen zu überwachen, um Betriebsstörungen, das heisst Abweichungen von dem normalen Betriebsverhalten, möglichst frühzeitig zu detektieren, oder um den Verschleisszustand einzelner Komponenten zu überwachen, damit notwendige Wartungsarbeiten rechtzeitig geplant und effizient durchgeführt werden können.

Dazu ist es beispielsweise möglich, die Anlage in periodischen Abständen zu inspizieren, wozu jedoch meistens ein Abschalten der Anlage notwendig ist, was unter wirtschaftlichen Aspekten nachteilig ist.

Häufig werden eine Mehrzahl von Prozessgrössen, wie beispielsweise Druck, Temperaturen an verschiedenen Orten der Anlage, Durchflussmengen, Drehzahlen, Leistungen, Lagertemperaturen usw. messtechnisch erfasst und z. B. als Funktion der Zeit gespeichert bzw. graphisch dargestellt. Üblicherweise arbeiten solche Anlagen aber nicht an einem festen Betriebs- oder Arbeitspunkt, sodass der zeitliche Verlauf der zur Überwachung erfassten Messgrössen auch im normalen, das heisst störungsfreien, Betrieb starke Schwankungen aufweist. Deshalb ist es anhand des zeitlichen Verlaufs der Messgrössen - wenn überhaupt - nur sehr schwer zu beurteilen, ob die Anlage störungsfrei arbeitet. Zwar kann man für einige messtechnisch erfasste Prozessgrössen fixe Schwellenwerte vorgeben, bei deren Unter- oder Überschreitung Alarm ausgelöst wird, aber dieses Vorgehen bringt aufgrund der variablen Arbeitspunkte den Nachteil mit sich, dass es häufig zu Fehlalarm kommt, oder real existierende Betriebsstörungen nicht rechtzeitig erkannt werden. Zudem ist es schwierig, zeitlich sehr langsame Veränderungen, wie sie beispielsweise durch betriebsbedingten Verschleiss auftreten, zu erkennen und zu beurteilen.

Prinzipiell wäre es möglich, die gesamte Anlage physikalisch zu modellieren, das heisst, die physikalischen Zusammenhänge zwischen den einzelnen Prozessgrössen zu berechnen, und dann durch einen Vergleich zwischen solchen physikalischen Modellrechnungen und messtechnisch erfassten Grössen eine Beurteilung des Betriebszustands durchzuführen. In der Praxis ist dieser Weg jedoch häufig viel zu kostenintensiv und aufwendig, sodass er insbesondere für industrielle Anwendungen wenig geeignet ist. Ein Grund dafür ist, dass solche Anlagen eine enorme Komplexität mit mehreren in gegenseitiger Wechselwirkung stehenden Subsystemen aufweisen, sodass ein einigermassen zuverlässiges physikalisches Modell eine Vielzahl von Zusammenhängen zwischen den einzelnen Prozessgrössen berücksichtigen muss, wodurch seine Erstellung zu einer äusserst schwierigen, zeit- und kostenintensiven Aufgabe wird.

In der EP-A-0 895 197 wird daher ein Überwachungsverfahren vorgeschlagen, das auf einer experimentellen Modellierung basiert, also ohne eine Vorab-Berechnung der physikalischen Zusammenhänge zwischen den Prozessgrössen auskommt. In vorgebbaren zeitlichen Abständen werden für einen festgelegten Satz von Prozessgrössen jeweils Messwerte erfasst. In einer ersten, sogenannten Modellierungsphase, werden für die Prozessgrössen für möglichst viele verschiedene Arbeitspunkte Messwerte erfasst, wobei überprüft wird, dass die Anlage während dieser Modellierungsphase störungsfrei arbeitet. Anhand der während der Modellierungsphase erfassten Messwerte wird ein experimentelles Modell für das Betriebsverhalten erstellt, wobei die Eingangsvariablen des Modells zumindest ein Teil des Satzes der Prozessgrössen sind und die Ausgangsgrössen einen Modellwert für mindestens eine der Prozessgrössen umfassen. Durch Vergleichen des jeweiligen Modellwerts mit dem ihm entsprechenden tatsächlichen Messwert der Modellierungsphase wird jeweils ein Residuum bestimmt, und das Modell wird durch Bestimmen von Modellparametern so optimiert, dass ein aus den Residuen bestimmbarer Modellfehler minimal wird. Als Modellstruktur wird üblicherweise ein einfacher mathematischer Zusammenhang gewählt, der in der Regel ohne physikalische Bedeutung ist. Nach Beendigung der Modellierungsphase hat somit das experimentelle Modell "gelernt", wie sich die Anlage bzw. die einzelnen Prozessgrössen an unterschiedlichen Arbeitspunkten verhalten.

In der zweiten Phase, der normalen Betriebsphase der Anlage, wird mit Hilfe des Modells für das Betriebsverhalten in vorgebbaren zeitlichen Abständen mindestens eine Überwachungsgrösse bestimmt, die unabhängig vom jeweils aktuellen Arbeitspunkt ist. Diese Überwachungsgrösse ist vorzugsweise das Residuum, das sich aus der Differenz aus dem jeweils aktuellen Messwert und dem ihm entsprechenden Modellwert ergibt. Der zeitliche Verlauf der Überwachungsgrösse wird zur Beurteilung des Verschleisses in den Subsystemen der Anlage und/oder zur Detektion von Betriebsstörungen herangezogen.

Das in der EP-A-0 895 197 offenbarte Verfahren hat den Vorteil, dass es im wesentlichen ohne physikalische Modellierung auskommt und daher sehr einfach sowie für industrielle Anwendungen geeignet ist. Zudem berücksichtigt es den jeweils aktuellen Arbeitspunkt der Anlage und kann auch langsam fortschreitende Veränderungen, wie sie beispielsweise durch Verschleiss verursacht werden, frühzeitig erkennen. Dadurch lassen sich auch komplexe Anlagen zuverlässig überwachen. Ferner ist eine effiziente Planung der Wartungsarbeiten möglich, was zu einer Reduktion der Unterhalts- und Betriebskosten führt.

Auch wenn sich das Verfahren gemäss EP-A-0 895 197 in der Praxis bewährt hat, so besteht dennoch ein Verbesserungsbedarf. Die Isolierung bzw. die Identifikation fehlerbehafteter Prozessgrössen ist nämlich relativ schwierig und aufwändig. Eine unerkannte Fehlerbehaftung einer Prozessgrösse kann zum Auslösen von Fehlalarmen führen, was insbesondere unter wirtschaftlichen Aspekten eine Einschränkung darstellt.

Es ist daher eine Aufgabe der Erfindung, ein solches Verfahren zum Überwachen einer Anlage mit mehreren Subsystemen, wie es in der EP-A-0 895 197 offenbart ist, dahingehend zu modifizieren und zu verbessern, dass eine Fehlerbehaftung einer Prozessgrösse zuverlässig erkennbar ist, dass die fehlerbehaftete Prozessgrösse einfacher identifizierbar ist, und dass Fehlalarme möglichst weitgehend vermieden werden.

Das diese Aufgabe lösende Verfahren zum Überwachen einer Anlage mit mehreren Subsystemen, die an variablen Arbeitspunkten betreibbar ist, ist durch die Merkmale des unabhängigen Anspruchs gekennzeichnet. Vorteilhafte Massnahmen und bevorzugte Ausgestaltungen der Erfindung ergeben sich aus den abhängigen Ansprüchen.

Das erfindungsgemässe Verfahren umfasst also die folgenden Schritte: Während des Betriebs der Anlage werden für einen festgelegten Satz von Prozessgrössen in vorgebbaren zeitlichen Abständen jeweils Messwerte erfasst. Die in einer Lernphase für verschiedene Arbeitspunkte erfassten Messwerte werden zur Erstellung von Modellen für das Betriebsverhalten der Subsysteme herangezogen, wobei die Eingangsgrössen jedes Modells zumindest ein Teil der Prozessgrössen sind und die Ausgangsgrösse jedes Modells einen Modellwert für mindestens eine der Prozessgrössen umfasst und wobei die Modelle durch Vergleichen der Modellwerte mit den Messwerten optimiert werden. In einer Betriebsphase wird mit Hilfe der Modelle in vorgebbaren zeitlichen Abständen zumindest eine Überwachungsgrösse bestimmt, die unabhängig vom jeweils aktuellen Arbeitspunkt ist und der zeitliche Verlauf der Überwachungsgrösse wird zur Überwachung der Anlage herangezogen. Vor dem Bestimmen der Überwachungsgrösse wird eine Vorprüfung durchgeführt, in welcher überprüft wird, ob zumindest die Messwerte für diejenigen Prozessgrössen, die Betriebsgrössen sind, innerhalb eines vorgegebenen Bereichs liegen.

Das erfindungsgemässe Verfahren beruht also darauf, dass die Messwerte für die Betriebs- und/oder Umgebungsgrössen einer Vorprüfung unterzogen werden, bevor sie als Eingangsgrössen für die spezifischen Modelle für die verschiedenen Subsysteme verwendet werden. Mit Betriebsgrössen sind dabei diejenigen Prozessgrössen gemeint, welche den Betriebszustands der gesamten Anlage beschreiben, welche also nicht spezifisch für ein individuelles Subsystem sind. Mit Umgebungsgrössen sind diejenigen Prozessgrössen gemeint, welche zumindest näherungsweise nicht durch den Betrieb der Anlage beeinflusst werden, beispielsweise die Lufttemperatur ausserhalb der Anlage. Da in der Regel in jedes spezifische Modell für das Betriebsverhalten eines Subsystems mindestens eine Betriebsgrösse als Eingangsgrösse eingeht, lässt sich durch die Vorprüfung der Messwerte für die Betriebsgrössen verhindern, dass fehlerbehaftete Eingangsgrössen für die Modelle der Subsysteme verwendet werden. Es ist also gewährleistet, dass nur solche Modelle für die Subsysteme ausgewertet werden, welche störungsfreie Umgebungs- und Betriebsgrössen als Eingangsgrössen aufweisen.

Durch diese Massnahme verbessert sich die Diagnosefähigkeit des Verfahrens erheblich, denn wenn nun anhand eines Modells für ein Subsystem eine Abweichung vom normalen Betriebsverhalten, z. B. eine Störung, ein Fehler oder hoher Verschleiss detektiert wird, so ist es sicher, dass der Fehler bzw. der Verschleiss tatsächlich in diesem Subsystem vorliegt, und dass er nicht auf einer Fehlerbehaftung einer Betriebsgrösse beruht. Somit wird die Wahrscheinlichkeit eines Fehlalarms drastisch reduziert.

Da bereits in der Vorprüfung die Betriebsgrössen und/oder die Umgebungsgrössen auf Fehler überprüft werden und erst anschliessend die Subsysteme mit den als störungsfrei klassifizierten Betriebs- bzw. Umgebungsgrössen überprüft werden, ist auch eine einfachere Fehlerisolierung oder Fehleridentifizierung möglich. Zeigt sich der Fehler nämlich bereits bei der Vorprüfung, so muss einer der Messwerte der Betriebsgrössen fehlerbehaftet sein oder bei der Bestimmung eines Messwerts für eine Umgebungsgrösse ist ein Fehler aufgetreten.

Das erfindungsgemässe Verfahren führt die Überwachung also quasi zweigeteilt durch. Zunächst werden in der Vorprüfung die Betriebsgrössen, welche den Betriebszustand der gesamten Anlage beschreiben, überprüft und erst dann werden mit den als störungsfrei klassifizierten Betriebsgrössen die spezifischen Modelle für das Betriebsverhalten der Subsysteme ausgewertet. Somit kann zuverlässig unterschieden werden, ob die Abweichung vom normalen Betriebsverhalten nur durch ein Subsystem oder durch mehrere Subsystem oder durch eine Fehlerbehaftung einer Betriebsgrösse oder einer Umgebungsgrösse verursacht wird.

Vorzugsweise wird für die Vorprüfung ein Maschinenmodell bestimmt, dessen Eingangsgrössen Betriebsgrössen sind und dessen Ausgangsgrössen einen Maschinenmodellwert für mindestens eine der Betriebsgrössen umfassen. Ein solches Maschinenmodell stellt nämlich eine relativ einfache und zuverlässige Methode dar, um die Betriebsgrössen auf Fehlerbehaftung zu prüfen.

Dabei ist es vorteilhaft, wenn das Maschinenmodell mindestens ein Modell umfasst, mit welchem ein Maschinenmodellwert für die Abweichung des Messwerts für eine Betriebsgrösse von einem theoretisch ermittelten Soll-Wert für diese Betriebsgrösse bestimmt wird. Mittels dieses Modells wird also die Abweichung des jeweils aktuellen Messwerts von einem theoretisch bestimmten Soll-Wert modelliert. Dann wird dieser Modellwert für die Abweichung mit dem tatsächlichen Wert der Abweichung verglichen. Es hat sich nämlich gezeigt, dass sich die Abweichung des Messwerts von dem theoretischen Wert wesentlich einfacher modellieren lässt und ein solches Modell zuverlässigere Aussagen liefert.

Das Modell für die Abweichung des Messwerts von dem theoretisch ermittelten Soll-Wert ist vorzugsweise ein experimentelles Modell, welches anhand der in der Lernphase erfassten Messwerte erstellt und optimiert wird.

Das Maschinenmodell kann in gleicher oder ähnlicher Weise erstellt werden wie die Modelle für das Betriebsverhalten der Subsysteme. Insbesondere kann also das Maschinenmodell anhand der Messwerte erstellt werden, die in der Lernphase für verschiedene Arbeitspunkte erfasst werden, wobei durch Vergleichen des Maschinenmodellwerts mit dem ihm entsprechenden tatsächlichen Messwert eine Abweichungsgrösse bestimmt wird, und Modellparameter des Maschinenmodells so optimiert werden, dass ein aus den Abweichungsgrössen bestimmbarer Modellfehler minimal wird.

Vorzugsweise werden während der Vorprüfung auch die Umgebungsgrössen auf Störungsfreiheit überprüft, beispielsweise durch redundantes Messen oder durch Plausibilitätsüberprüfungen.

Ferner ist es vorteilhaft, wenn die Vorprüfung einen Bereichstest umfasst, in welchem überprüft wird, ob einzelne oder Kombinationen von Betriebsgrössen innerhalb des in der Lernphase erlernten Bereichs von Arbeitspunkten liegen. Hierdurch kann nämlich verhindert werden, dass "ungelernte" Zustände der Anlage zu Fehlwarnungen führen.

In der bevorzugten Ausführung werden nach der Vorprüfung jeweils nur die Modelle für die Subsysteme ausgewertet, in welche nur Prozessgrössen eingehen, für die in der Vorprüfung kein Fehler oder keine Störung detektiert wird. Durch diese Massnahme lässt sich unnötiger Rechen- oder Auswerteaufwand vermeiden.

Eine weitere vorteilhafte Massnahme ist es, wenn mindestens für eine Überwachungsgrösse ein Vertrauensbereich festgelegt wird, dieser Vertrauensbereich vergrössert werden kann, wenn die Überwachungsgrösse den ursprünglichen Vertrauensbereich verlässt, und die Vergrösserung des Vertrauensbereichs registriert wird. Durch diese Massnahme wird das Bedienpersonal bereits frühzeitig beispielsweise auf Verschleisserscheinungen aufmerksam, sodass Wartungsarbeiten rechtzeitig geplant werden können.

Im Folgenden wird die Erfindung anhand eines Ausführungsbeispiels und anhand der Zeichnung näher erläutert. In der schematischen Zeichnung zeigen:

Fig. 1:    eine Blockdarstellung eines Ausführungsbeispiels des erfindungsgemässen Verfahrens,

Fig. 2:    eine Blockdarstellung für die Vorprüfung in dem Ausführungsbeispiel nach Fig. 1,

Fig. 3:    eine Blockdarstellung zur Veranschaulichung einer Ausführungsform eines Maschinenmodells, und

Fig. 4:    eine Darstellung eines Ausführungsbeispiels eines dreidimensionalen Histogramms.

Bei der folgenden Beschreibung wird mit beispielhaftem Charakter auf den konkreten Anwendungsfall Bezug genommen, dass es sich bei der zu überwachenden Anlage um eine Turbine mit einem von dieser angetriebenen Generator zur Erzeugung elektrischer Energie handelt, wie sie in Wasserkraftwerken eingesetzt werden. Natürlich ist die Erfindung nicht auf solche Anwendungen beschränkt, die zu überwachende Anlage kann beispielsweise auch eine Gasturbine mit nachgeschaltetem Generator sein, ein Turbo- oder Kolbenkompressor zur Verdichtung von Gasen, eine Pumpenanlage oder ein Flugtriebwerk.

Mit dem Begiff "Subsystem" sind Teile der Anlage, Teilsysteme oder einzelne Komponenten gemeint, welche durch Prozessgrössen beschrieben werden, zwischen denen ein physikalischer Zusammenhang existiert. Dabei kann es sich bei einem solchen Subsystem um ein konkretes konstruktiv zusammenhängendes Bauteil-System, beispielsweise das Bauteil-System "Axiallager" handeln, welches z. B. durch verschiedene Lagertemperaturen als Prozessgrössen gekennzeichnet ist. Es kann sich aber auch um ein funktionell zusammenhängendes Subsystem handeln, beispielsweise das Subsystem "gekühltes Axiallager", welches ausser durch die Lagertemperaturen durch weitere Prozessgrössen, wie z. B. Öltemperatur, Kühlwassertemperatur und Leistung gekennzeichnet ist.

Mit dem Begriff "Prozessgrösse" ist allgemein eine Grösse aus einer Gesamtheit von physikalischen Grössen gemeint, welche Gesamtheit in dieser Anwendung den Betriebszustand der Anlage und ihrer Teil- oder Subsysteme beschreibt. Die Prozessgrössen sind also unmittelbar oder mittelbar erfassbare Grössen, die der Charakterisierung des Betriebszustandes der Anlage bzw. ihrer Subsysteme dienlich sind oder einen Einfluss auf den Betriebszustand der Anlage haben. Für das konkrete Beispiel der Turbine im Wasserkraftwerk umfasst der Begriff Prozessgrösse beispielsweise die folgenden Grössen: Leistung, Leitradstellung, Laufradstellung, Nettofallhöhe des Wassers, Druck vor und hinter der Turbine, Durchflussmenge des Wassers, Temperatur des Wassers, Drehzahl der Turbine, Temperatur des Kühlmediums, Temperatur im Generator, Temperaturen in Wellenlagern oder -dichtungen, Schallemissionen, Vibrationen, Schaufelstellungen usw. Einige der Prozessgrössen sind vom Bedienpersonal direkt beeinflussbar, wie beispielsweise die Durchflussmenge an Wasser durch die Turbine, andere Prozessgrössen, wie beispielsweise die Temperatur im Wellenlager oder in der Wellendichtung, sind dagegen nicht direkt beeinflussbar. Es gibt eine Vielzahl von Prozessgrössen, die jedoch nicht alle unabhängig voneinander sind, sondern in der Regel eine starke Korrelation aufweisen.

Bei den Prozessgrössen wird zwischen drei Typen unterschieden, nämlich den Umgebungsgrössen, den Betriebsgrössen und den Bauteilgrössen.

Die Umgebungsgrössen sind solche Prozessgrössen, welche näherungsweise nicht durch den Betrieb der Anlage beeinflusst werden, beispielsweise die Wassertemperatur im Zulauf oder die Lufttemperatur ausserhalb der Anlage bzw. des Gebäudes, in welchem sich die Anlage befindet.

Die Betriebsgrössen sind solche Prozessgrössen, welche den Betriebszustand der gesamten Anlage beschreiben. Die Betriebsgrössen haben die Eigenschaft, dass sie näherungsweise unkorreliert zu den Umgebungsgrössen sind, und dass zwischen ihnen näherungsweise statische Zusammenhänge bestehen. Beispiele für Betriebsgrössen sind die Leistung, die Leitradstellung, die Laufradstellung, die Fallhöhe des Wassers, der Durchfluss oder der Wirkungsgrad.

Die Bauteilgrössen sind diejenigen Prozessgrössen, die nicht Umgebungs- oder Betriebsgrössen sind. Sie sind Grössen, die spezifisch für ein Subsystem sind, beispielsweise Lagertemperaturen, Prozessgrössen, welche das Ölschmier- und das Ölkühlsystem beschreiben, Öldruck. Bauteilgrössen können lokal, das heisst auf das Subsystem beschränkt, welches sie beschreiben, die Bedeutung von Betriebsgrössen für dieses Subsystem erlangen.

Mit dem "Arbeitspunkt" oder "Betriebspunkt" ist derjenige Betriebszustand gemeint, bei dem die Anlage momentan arbeitet. Jede mit der Anlage realisierbare Kombination von Prozessgrössen entspricht einem Arbeitspunkt. Die Gesamtheit der möglichen Arbeitspunkte wird als Betriebsbereich bezeichnet. Üblicherweise ist der Arbeitspunkt der Anlage vom Bedienpersonal vorgebbar, indem direkt beeinflussbare Prozessgrössen auf den gewünschten Wert eingestellt werden. Läuft die Turbine beispielsweise im Teillastbetrieb, so arbeitet sie an einem anderen Arbeitspunkt als im Volllastbetrieb. Der Arbeitspunkt der Anlage ist durch die Betriebs- und Umgebungsgrössen festgelegt.

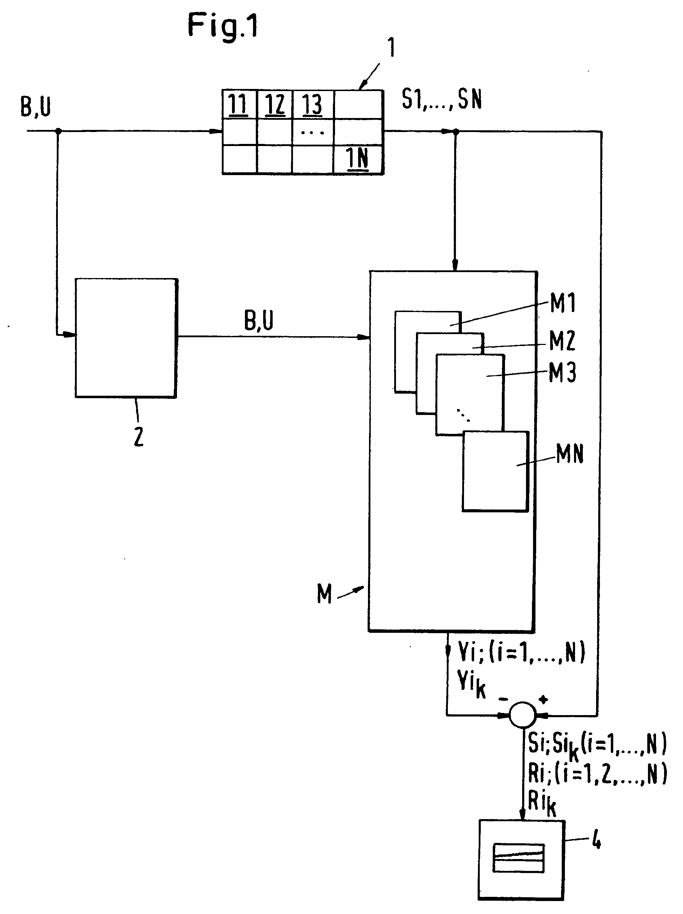

Fig. 1 veranschaulicht in einer schematischen Blockdarstellung das Konzept eines Ausführungsbeispiel des erfindungsgemässen Verfahrens. Die zu überwachende Anlage, hier also die Turbinen-Generator-Einheit ist gesamthaft mit dem Bezugszeichen 1 bezeichnet und umfasst insgesamt N Subsysteme 11,12,...,1N wobei N eine beliebige natürliche Zahl ist. Mittels nicht dargestellter Sensoren werden während des Betriebs der Anlage 1 für einen festgelegten Satz von Prozessgrössen B, U, S1, S2, ...,SN in vorgebbaren zeitlichen Abständen, beispielsweise jede Minute oder alle 10 Minuten, Messwerte erfasst. Die Prozessgrössen B sind Betriebsgrössen, beispielsweise der Durchfluss, die Laufradstellung, die Leitradstellung, die elektrische Klemmenleistung des Generators, die Nettofallhöhe des Wassers. Die Prozessgrössen U sind Umgebungsgrössen, beispielsweise die Temperatur der Umgebungsluft oder die Wassertemperatur im Zulauf.

Die Prozessgrössen Si (i = 1,2,...,N) sind Bauteilgrössen des Subsystems 1i wie beispielsweise Lagertemperaturen, Kühlmitteltemperaturen, Vibrationen usw., das heisst mit Si wird die Gesamtheit der Bauteilgrössen bezeichnet, welche zur Beschreibung des Subsystems 1 i dienen.

Wie weiter hinten noch erläutert, werden die in einer Lernphase für verschiedene Arbeitspunkte erfassten Messwerte für die Prozessgrössen zur Erstellung von Modellen M1, M2,...,MN für das Betriebsverhalten der Subsysteme 11 bis 1N herangezogen, wobei das Modell Mi (i=1,2,...,N) das Betriebsverhalten des Subsystems 1i beschreibt. Jedes dieser Modelle Mi hat als Eingangsgrössen neben den Bauteilgrössen Si dieses Subsystems 1i mindestens eine aber üblicherweise mehrere der Betriebsgrössen B sowie gegebenenfalls eine oder mehrere Umgebungsgrössen U. Die Betriebsgrössen B gehen also in mehrere oder in alle der Modelle Mi ein. Die Ausgangsgrösse jedes Modells Mi umfasst einen Modellwert Yi (i=1,2,...,N) für mindestens eine der Prozessgrössen, die Bauteilgrössen Si für das Subsystem 1i ist. Für jedes Subsystem 1i wird also ein Modell Mi erstellt. Die Gesamtheit der Modelle Mi ist in Fig. 1 mit M bezeichnet.

Während der Betriebsphase der Anlage 1 werden die jeweils erfassten, aktuellen Messwerte für diejenigen Bauteilgrössen Si, die den berechneten Modellwerten Yi entsprechen, mit diesen Modellwerten Si verglichen, und daraus Überwachungsgrössen Ri (i=1,2,...,N) bestimmt, die unabhängig vom jeweiligen Arbeitspunkt der Anlage sind. Vorzugsweise sind die Überwachungsgrössen Ri jeweils Residuen, die sich durch Differenzbildung aus den jeweils aktuellen Messwerten für die Bauteilgrössen Si und den zugehörigen Modellwerten Yi ergeben.

Der zeitliche Verlauf der Überwachungsgrössen Ri wird zur Überwachung und zur Diagnose der Anlage herangezogen. Beispielsweise wird der zeitliche Verlauf der Überwachungsgrössen Ri auf einer Ausgabeeinheit 4 grafisch dargestellt. Anhand des zeitlichen Verlaufs der Überwachungsgrössen Ri lässt sich der Verschleiss beurteilen und es lassen sich Betriebsstörungen detektieren. Mit Verschleiss sind dabei betriebsbedingte, üblicherweise langsam fortschreitende Änderungen gemeint, beispielsweise im Wellenlager oder in den Wellendichtungen sowie z. B.Ablagerungen in Leitungen oder Verschmutzungen von Filtern. Betriebsstörungen können beispielsweise Ausfälle oder Fehlfunktionen einer der Sensoren oder der von ihnen überwachten Aktuatoren (z. B. Ventile, Steuerklappen) sein oder Störungen in der Anlage 1 wie beispielsweise Änderung von Vibrationen oder Überhitzung von Lagern oder Dichtungen.

Erfindungsgemäss wird vor dem Bestimmen der Überwachungsgrössen Ri eine Vorprüfung 2 durchgeführt, in welcher überprüft wird, ob zumindest die Messwerte für diejenigen Prozessgrössen, die Betriebsgrössen B sind, innerhalb eines vorgegebenen Bereichs liegen. Durch diese Massnahme lässt sich die Effizienz des Verfahrens deutlich steigern. Da in der Betriebsphase der Anlage 1 die aktuellen Messwerte für die Betriebsgrössen B jeweils überprüft werden, bevor die Modelle Mi für die Subsysteme 1i ausgewertet werden, wird verhindert, dass sich Fehler in den Betriebsgrössen B in den Modellen Mi für die Subsysteme 1i fortpflanzen und zu Fehlalarmierungen oder zu Fehldiagnosen führen. Zudem wird durch die Vorprüfung 2 und die nachfolgende Abarbeitung der Modelle Mi für die Subsysteme 1i die Identifizierung fehlerbehafteter Prozessgrössen (fault isolation) zuverlässig und in einfacher Weise ermöglicht. Wird nämlich bereits bei der Vorprüfung 2 detektiert, dass eine der Betriebsgrössen B fehlerbehaftet ist, so ist klar, dass dies nicht auf einen spezifischen Fehler in einem der Subsysteme 1i zurückzuführen ist. Wird der Fehler dagegen erst dadurch detektiert, dass eine der Überwachungsgrössen Ri einen anormalen Wert aufweist, so kann sicher davon ausgegangen werden, dass der Fehler in dem Subsystem 1i zu suchen ist, dessen Überwachungsgrösse Ri ausserhalb des normalen Bereichs liegt.

Die Vorprüfung 2 der Betriebsgrössen B erhöht zudem die Zuverlässigkeit der Verschleissüberwachung für die einzelnen Subsysteme 1i und erleichtert somit deutlich die Planung von Wartungsarbeiten.

Zeitlich gesehen, lässt sich das erfindungsgemässe Verfahren in zwei Phasen aufteilen, nämlich in eine Lernphase und eine Betriebsphase. Die Lernphase dient dazu, die Modelle Mi für die Subsysteme 1i zu erstellen und in der Betriebsphase wird die Anlage 1 mittels der Modelle Mi überwacht. Wie die Modelle Mi für die Subsysteme 1i anhand der in der Lernphase ermittelten Messwerte für die Prozessgrössen bestimmbar sind, ist in der bereits zitierten EP-A-0 895 197 ausführlich erläutert und wird daher hier nur knapp umrissen. Für weitergehende Informationen sei auf die EP-A-0 895 197 verwiesen, die hiermit in die vorliegende Beschreibung inkorporiert wird.

Die Modelle Mi (i=1,2,...,N) für die Subsysteme 1i sind Modelle, welche direkt aus experimentellen Daten, das heisst aus den Messwerten für die Prozessgrössen B,U,S1,...,SN gewonnen werden. Für die Erstellung der Modelle Mi werden diejenigen Messwerte für die Prozessgrössen B,U,S1,...,SN verwendet, die während der Lernphase erfasst werden. Dabei bezeichnet die Lernphase eine zeitlich begrenzte Betriebsperiode der Anlage 1, während der die Anlage 1 im normalen, das heisst störungsfreien Betrieb arbeitet. Die Wahl der Lernphase kann aufgrund von Erfahrung erfolgen. Beispielsweise wird nach der Inbetriebnahme oder einer Revision der Anlage 1 abgewartet, bis typische Einlaufvorgänge abgeschlossen sind. Die Lernphase wird zeitlich so lang gewählt, dass sie mehrere verschiedene Arbeitspunkte aus dem Betriebsbereich der Anlage 1 umfasst, das heisst während der Lernphase wird die Anlage an einer Vielzahl verschiedener Arbeitspunkte betrieben, wobei stets durch Überprüfungen sichergestellt wird, dass die Anlage 1 während der Lernphase fehlerfrei arbeitet bzw., dass nur solche Messwerte für die Erstellung der Modelle Mi herangezogen werden, bei deren Erfassung die Anlage 1 fehler- und störungsfrei gearbeitet hat.

Während der Lernphase werden Messwerte für die Prozessgrössen B,U,S1,...,SN gesammelt. Diese Messwerte beziehen sich mithin auf mehrere verschiedenen Arbeitspunkte.

Für die Erstellung des Modells Mi des Subsystems 1i (i=1,2,...,N) wird aus dem Satz von Bauteilgrössen Si, die dieses Subsystem 1i beschreiben, mindestens eine der Bauteilgrössen ausgewählt, die ohne Beschränkung der Allgemeinheit im Folgenden mit $Si_k$ bezeichnet wird. Für diese wird mittels des Modells Mi ein Modellwert $Yi_k$ bestimmt. Als Eingangsvariablen des Modells Mi werden zumindest ein Teil der Bauteilgrössen Si dieses Subsystems 1i sowie Betriebsgrössen B und gegebenenfalls noch Umgebungsgrössen U verwendet. Der Einfachheit halber wird im Folgenden beispielhaft der Fall erläutert, dass genau eine der Bauteilgrössen, nämlich $Si_k$, die Ausgangsgrösse des Modells Mi ist.

Während der Lernphase werden eine Vielzahl Sätze $(B,U,Si)_T$ von Messwerten für die Prozessgrössen B,U, Si gesammelt und gespeichert, wobei der Index T die zeitlich aufeinanderfolgenden Messwertsätze $(B,U,Si)_T$ indiziert.

Als Modellstruktur für das Modell Mi wird im einfachsten Fall eine lineare statische Modellstruktur gewählt, das heisst die Prozessgrösse $Si_k$ wird als Linearkombination der Eingangsvariablen des Modells Mi dargestellt. Die Koeffizienten dieser Linearkombination, die mit $a_m$ bezeichnet werden, wobei m ein Laufindex ist, sind die Modellparameter für das Modell Mi.

Die Sätze $(B,U,Si)_T$ von Messwerten liefern die Bestimmungsgleichungen für die Modellparameter $a_m$. Da in der Regel die Anzahl der Sätze von Messwerten erheblich grösser ist als die Anzahl der Modellparameter $a_m$, ist das System der Bestimmungsgleichungen überbestimmt. Es sind jedoch genügend mathematische Methoden bekannt, um mittels der Bestimmungsgleichungen möglichst gute Werte für die Modellparameter $a_m$ zu ermitteln. Beispielsweise geeignet sind Methoden der Ausgleichsrechnung, die Methode der kleinsten Quadrate, die Methode der Singularwertzerlegung (SVD) oder die Principal Component Analysis (PCA). Da solche Methoden hinlänglich bekannt sind, werden sie hier nicht näher erläutert.

Mittels des Modells Mi wird nun für jeden Satz $(B,U,Si)_T$ der zugehörige Modellwert $(Yi_k)_T$ als Linearkombination der Prozessgrössen B,U,Si mit den Koeffizienten $a_m$ ermittelt.

Die $(Yi_k)_T$ bilden einen Satz von Modellwerten, wobei $(Yi_k)_T$ der Modellwert für die Bauteilgrösse $Si_k$ für die Zeit T ist. Die Modellwerte $(Yi_k)_T$ werden mit den ihn entsprechenden tatsächlichen Messwerten für die Bauteilgrösse $(Si_k)_T$ durch Differenzbildung verglichen und daraus jeweils ein Residuum $r_T$ bestimmt. Aus der Gesamtheit der Residuen $r_T$ wird ein Modellfehler $\varepsilon$ bestimmt, der ein Mass für die Güte des Modells Mi ist. Der Modellfehler $\varepsilon$ kann beispielsweise die normierte Summe der Quadrate der Residuen sein.

Im Folgenden wird durch Bestimmen der Modellparameter $a_m$ und jeweiliges erneutes Bestimmen des Modellfehlers $\varepsilon$ das Modell Mi solange optimiert, bis der Modellfehler $\varepsilon$ minimal ist oder eine vorgegebene Grenze unterschreitet. Ist dies erreicht, so ist das Modell Mi genügend gut für die Überwachung.

Die Schwankungen der während der Lernphase ermittelten Residuen $r_T$ repräsentieren, wie stark die Abweichung des Modellwerts $Yi_k$ vom tatsächlichen Messwert $Si_k$ typischerweise ist. Daher werden in der normalen Betriebsphase die Vertrauensbereiche der Modelle bzw. die Schwellenwerte für die Überwachungsgrösse vorzugsweise anhand der in der Lernphase ermittelten Residuen $r_T$ festgelegt.

Da es sich bei den Modellen Mi um rein experimentelle Modelle handelt, haben die verwendeten Modellstrukturen in der Regel keine physikalische Bedeutung.

Nachdem für jedes Subsystem Si ein Modell Mi anhand der in der Lernphase erfassten Messwerte erstellt und optimiert ist, ist es möglich, für jede derjenigen Kombinationen von Werten der Prozessgrössen B,U,S1,...SN, die einem Arbeitspunkt aus dem Betriebsbereich der Anlage 1 entsprechen, einen Modellwert $Yi_k$ für die Bauteilgrösse $Si_k$ zu bestimmen, der in sehr guter Näherung angibt, welchen Wert die Bauteilgrösse $Si_k$ haben müsste, wenn die Anlage 1 im normalen also störungsfreien Betrieb arbeitet. Mit anderen Worten: Die Modelle Mi berücksichtigen den momentanen Arbeitspunkt der Anlage 1.

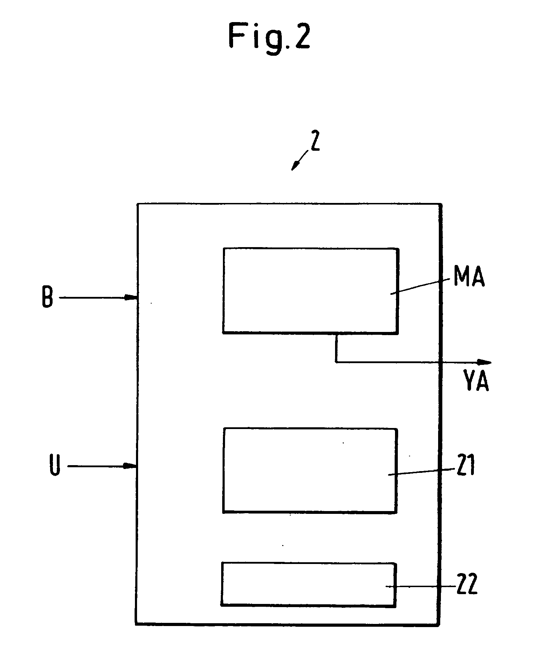

Im Folgenden wird nun ein bevorzugtes Ausführungsbeispiel für die Vorprüfung 2 näher erläutert. Diese Vorprüfung 2 findet üblicherweise in einer Auswerteeinheit statt, welche mit den Sensoren für die Messwerterfassung und einer übergeordneten Kontrollvorrichtung für die Anlage 1 zum Datenaustausch signalverbunden ist. Das Ausführungsbeispiel ist schematisch in Fig. 2 veranschaulicht. Die Vorprüfung 2 umfasst die folgenden Komponenten: ein Maschinenmodell MA, dessen Eingangsgrössen Betriebsgrössen B sind und dessen Ausgangsgrössen einen Maschinenmodellwert YA für mindestens eine der Betriebsgrössen umfassen; einen Bereichstest 21, in welchem überprüft wird, ob einzelne oder Kombinationen von Betriebsgrössen innerhalb des in der Lernphase erlernten Bereichs von Arbeitspunkten liegen; einen Test 22, mit welchem die Umgebungsgrössen auf Störungsfreiheit überprüft werden.

Das Maschinenmodell MA basiert im wesentlichen auf dem gleichen Konzept wie die Modelle Mi für die Subsysteme 1i. Das Maschinenmodell MA hat als Eingangsgrössen Betriebsgrössen B, für die in regelmässigen Abständen Messwerte mittels der Sensoren erfasst werden. Die Aufgabe des Maschinenmodells MA ist es, für eine oder mehrere ausgewählte Betriebsgrössen Maschinenmodellwerte zu berechnen, die dann mit den entsprechenden Messwerten für die Betriebsgrössen verglichen werden können. Für das Folgende wird der Einfachheit halber angenommen, dass das Maschinenmodel MA nur für genau eine ausgewählte Betriebsgrösse B einen Maschinenmodellwert YA berechnet. Es versteht sich natürlich, dass in der Praxis für mehr als eine Betriebsgrösse B Maschinenmodellwerte berechnet werden können, wofür auch mehr als ein Maschinenmodell vorgesehen sein kann. Zweckmässigerweise werden mit dem Maschinenmodell oder den Maschinenmodellen MA für diejenigen Betriebsgrössen B Maschinenmodellwerte YA berechnet, welche als Eingangsgrössen für die Modelle Mi der Subsysteme 1i verwendet werden.

Für das konkrete Beispiel einer Turbine mit Generator eignen sich insbesondere die Betriebsgrössen elektrische Klemmenleistung P des Generators und Durchfluss Q als Ausgangsgrössen für das Maschinenmodell MA, denn zusammen mit der Fallhöhe H stellen P und Q die wichtigsten Betriebsgrössen dar, die in der Regel für jedes Modell Mi der Subsysteme 1 i als Eingangsgrössen verwendet werden.

Das Maschinenmodell MA wird wie die Modelle Mi für die Subsystem anhand von Messwerten erstellt, die während der Lernphase messtechnisch erfasst und gespeichert werden. Vorzugsweise werden für das Maschinenmodell MA zusätzlich Grundlagenwissen über die Anlage 1 und Vorwissen, z. B. aus Modellversuchen, eingebracht. Vorzugsweise ist also das Maschinenmodell MA im Unterschied zu den Modellen Mi kein rein experimentelles Modell, sondern berücksichtigt auch bekannte physikalische Zusammenhänge zwischen den Betriebsgrössen B und Vorwissen über die Anlage 1.

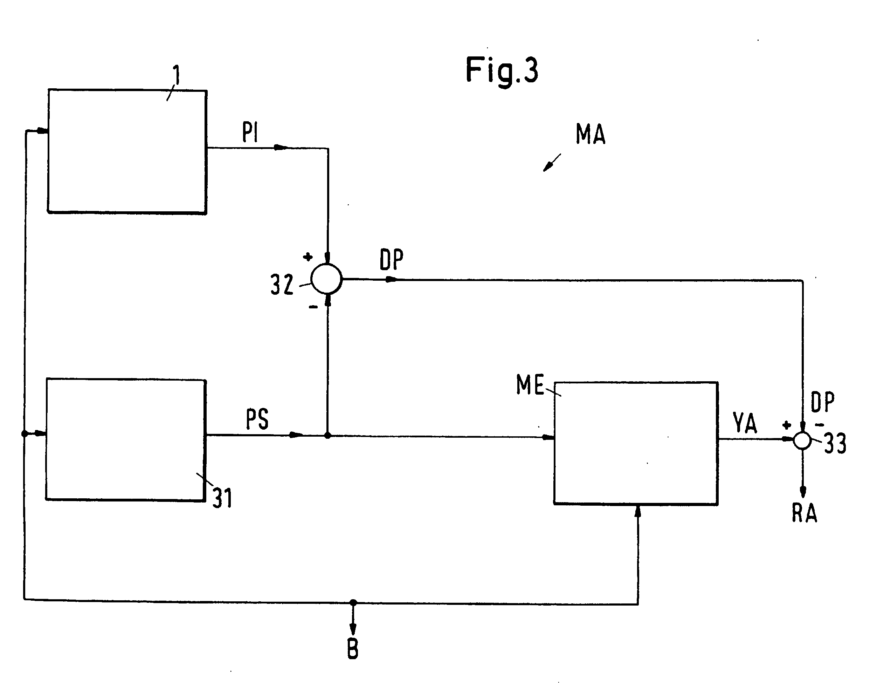

In Fig. 3 ist ein konkretes Ausführungsbeispiel für die Implementierung des Maschinenmodells MA schematisch veranschaulicht. Es dient dazu, die Betriebsgrösse P, welche die elektrische Klemmenleistung des Generators ist, auf Störungsfreiheit zu prüfen. Mit PI wird der Ist-Wert der Betriebsgrösse P bezeichnet, der messtechnisch erfassbar ist, und mit PS der Soll-Wert von P, der theoretisch, basierend auf Grundlagen- und Vorwissen, in Abhängigkeit von Betriebsgrössen B berechnet wird. Dieser Soll-Wert PS wird von einem Modul 31 theoretisch berechnet. Das Modul 31 kann beispielsweise ein physikalisches Modell umfassen. Auch ist es möglich, dass das Modul 31 bekannte physikalische Zusammenhänge oder empirisch ermittelte Zusammenhänge zwischen Betriebsgrössen oder Vorwissen über die Anlage 1 auswertet. Das Modul 31 liefert einen theoretischen Soll-Wert PS für die Klemmenleistung in Funktion der Betriebsgrössen Laufradstellung LA, Leitradstellung LE und Nettofallhöhe HN, deren aktuelle Werte messtechnisch erfasst werden. Bei dieser Berechnung können weitere Grössen berücksichtigt werden, wie die numerische Beschreibung der Wirkungsgrad-Muschelkurven $\eta h(LA,LE,HN)$ der Turbine, der Wirkungsgrad $\eta g$ des Generators und mechanische Verluste PM.

Am Punkt 32 in Fig. 3 wird die Differenz DP aus dem messtechnisch erfassten Ist-Wert PI und dem theoretisch berechneten Soll-Wert PS ermittelt. Diese Differenz DP ist ebenfalls eine Betriebsgrösse B, die im hier beschriebenen Ausführungsbeispiel dazu dient, die Störungsfreiheit der Betriebsgrösse P zu überprüfen.

Die Differenz DP = PI - PS zwischen Ist-Wert PI und Sollwert PS lässt sich zumindest näherungsweise durch eine Ergänzungsfunktion $f(LA,LE,HN,PS) \approx PI - PS$ beschreiben, die von den Betriebsgrössen LA, LE, und HN abhängt. Diese Funktion f wird in einem Modell ME ermittelt. Da man davon ausgehen kann, dass die Differenz DP zwischen Ist-Wert PI und Soll-Wert PS eine ähnliche Abhängigkeit von den Betriebsgrössen aufweist wie der Soll-Wert PS, wird für die Funktion f bzw. das Modell ME der folgende Modellansatz gewählt:

$$f = b0 + b1 \cdot LE + b2 \cdot LA + b3 \cdot HN + b4 \cdot PS$$

Um eine Erhöhung der Modellgüte zu erzielen, kann es auch nützlich sein, einen Modellansatz zu wählen, der nichtlinear in den Eingangsgrössen ist.

Anhand der in der Lernphase für verschiedene Arbeitspunkte der Anlage 1 erfassten Messwerte für die Betriebsgrössen B werden nun in sinngemäss gleicher Weise wie für die Modelle Mi der Subsysteme 1 i die Modellparameter b0,b1,b2,b3,b4 des Modells ME bestimmt und optimiert. Das Modell ME ist somit ein experimentelles Modell, mit welchem die Abweichung DP der Betriebsgrösse P von einem theoretisch ermittelten Soll-Wert modelliert wird.

Während der Lernphase werden eine Vielzahl Sätze $(LE,LA,HN,PI)_T$ von Messwerten für die Betriebsgrössen LE,LA,HN,PI gesammelt und gespeichert, wobei der Index T die zeitlich aufeinanderfolgenden Messwertsätze $(LE,LA,HN,PI)_T$ indiziert. Für jeden dieser Sätze berechnet das Modul 31 den zugehörigen theoretischen Soll-Wert $(PS)_T$. Durch Differenzbildung aus dem zum Index T gehörenden Messwert für die Ist-Leistung $(PI)_T$ und dem Soll-Wert $(PS)_T$ am Punkt 32 in Fig. 3 ist somit für jeden der durch T indizierten Sätze $(LE,LA,HN,PI)_T$ die Differenz $(DP)_T = (PI)_T - (PS)_T$ als Betriebsgrösse bekannt.

Die Sätze $(LE,LA,HN)_T$ zusammen mit dem zugehörigen Wert $(PS)_T$ liefern die Bestimmungsgleichungen für die Modellparameter b0 bis b4. Mittels der Funktion f bzw. des Modells ME lässt sich dann für jeden Index T ein Maschinenmodellwert $(YA)_T$ für die Abweichung des Ist-Werts PI der Leistung von dem Soll-Wert PS der Leistung ermitteln. Durch jeweiliges Vergleichen des Maschinenmodellwerts $(YA)_T$ mit dem entsprechenden Messwert der Differenz $(DP)_T = (PI)_T - (PS)_T$ wird dann eine Abweichungsgrösse $\delta_T$ bestimmt, beispielsweise das Residuum $\delta_T = (YA)_T - (DP)_T$ (Punkt 33 in Fig. 3). Aus der Gesamtheit der Residuen $\delta_T$ wird ein Modellfehler $\delta$ bestimmt, der ein Mass für die Güte des Modells ME ist. Der Modellfehler $\delta$ kann beispielsweise die normierte Summe der Quadrate der Residuen sein.

Im Folgenden wird durch Bestimmen der Modellparameter b0,b1,b2,b3,b4 und jeweiliges erneutes Bestimmen des Modellfehlers $\delta$ das Modell ME solange optimiert, bis der Modellfehler $\delta$ minimal ist oder eine vorgegebene Grenze unterschreitet. Ist dies erreicht, so ist das Modell ME genügend gut.

Während der Betriebsphase (also nach Abschluss der Lernphase) wird im Rahmen der Vorprüfung 2 in vorgegebenen zeitlichen Abständen mit Hilfe des Maschinenmodells MA der jeweils aktuelle Maschinenmodellwert YA für die Differenz DP zwischen der messtechnisch erfassten Leistung PI und dem Soll-Wert PS der Leistung ermittelt. Dieser Maschinenmodellwert YA wird mit dem entsprechenden aktuellen Messwert dieser Betriebsgrösse DP verglichen und daraus ein Residuum RA für die Anlage 1 ermittelt, z. B. durch Differenzbildung (Punkt 33 in Fig. 3). Dieses Residuum RA stellt eine Überwachungsgrösse dar. Liegt das Residuum RA innerhalb eines vorgegebenen Bereichs, dem sogenannten Vertrauensbereich, so wird die Betriebsgrösse P als störungs- oder fehlerfrei klassifiziert. Anderenfalls erfolgt eine Warnung wie weiter hinten noch erläutert wird. Ursachen für eine solche Warnung können beispielsweise sein: Eine Störung von HN aufgrund einer Verschmutzung von Bohrungen und Leitungen oder aufgrund eines Lufteinschlusses; Störungen von LA oder LE ; Störung bei der Messung der Leistung PI; Abfall des hydraulischen Wirkungsgrads $\eta h$ oder des Wirkungsgrad $\eta g$ des Generators; zu hohe Lager-Verlustleistung, mechanische Beschädigungen.

In sinngemäss gleicher Weise können auch für andere Betriebsgrössen B, insbesondere für den Durchfluss Q, Maschinenmodelle MA anhand der in der Lernphase erfassten Messwerte und anhand von Grundlagenkenntnissen bzw. Vorwissen über die Anlage 1 erstellt werden. Auch für den Durchfluss Q wird vorzugsweise ein Modell (entsprechend dem Modell ME in Fig. 3) erstellt, mit welchem ein Maschinenmodellwert für die Abweichung DQ des theoretisch berechneten Durchflusses QS vom tatsächlichen, messtechnisch erfassten Durchfluss QI bestimmbar ist. Dieser Maschinenmodellwert wird dann mit der tatsächlichen Abweichung des theoretischen Durchflusses vom gemessenen Durchfluss verglichen, analog dazu wie dies in Fig. 3 dargestellt ist.

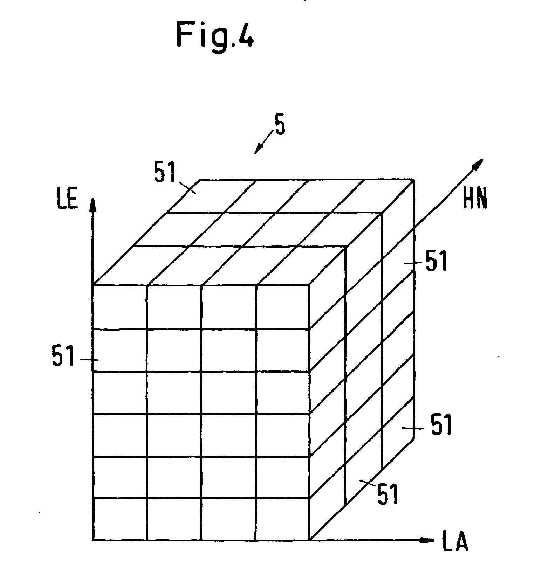

Im Bereichstest 21 (siehe Fig. 2) der Vorprüfung 2 wird überprüft, ob einzelne oder Kombinationen von Betriebsgrössen B innerhalb des in der Lernphase erlernten Bereichs von Arbeitspunkten liegen. Primär soll der Bereichstest 21 verhindern, dass ungelernte Zustände zu hohen Residuen und damit zu Fehlwarnungen führen. Vorzugsweise erfolgt der Bereichstest 21 anhand eines Histogramms der Dimension d (d=1,2,3,...) oder einer Hyperebene, welche anhand der in der Lernphase erfassten Messwerte für die Betriebsgrössen erstellt werden. Ein Histogramm 5 mit der Dimension d=3 ist für das Beispiel der drei Betriebsgrössen LA,LE,HN in Fig. 4 dargestellt. Dieses Histogramm 5 lässt sich als eine dreidimensionale Integer-Matrix darstellen und umfasst mehrere Klassen 51, die in Fig. 4 als Quader dargestellt sind. Jede Klasse 51 entspricht einer Kombination der drei Betriebsgrössen LA,LE,HN, bei welcher sowohl LA als auch LE als auch HN jeweils in einem bestimmten Wertebereich liegen. Folglich kann jede Kombination von Werten für LA,LE, HN in eine der Klassen 51 eingeordnet werden.

Während der Lernphase wird, wie bereits erwähnt, die Anlage 1 an vielen verschiedenen Arbeitspunkten betrieben, sodass auch verschiedene Kombinationen der Werte für die Betriebsgrössen LA,LE,HN auftreten. Für jede fehlerfreie, während der Lernphase erfasste Kombination von LA,LE,HN wird entschieden, welcher Klasse 51 sie zuzuordnen ist. Nachdem die Klasse 51 bestimmt ist, in welche die Kombination von LA,LE,HN einzuordnen ist, wird die Wahrscheinlichkeit des Eintreffens einer in diese Klasse gehörenden Kombination anhand der aus dem Histogramm 5 berechneten relativen Häufigkeit bisher in dieser Klasse 51 eingeordneter Ereignisse beurteilt.

Nach Beendigung der Lernphase ist also anhand des Histogramms 5 für jede Klasse 51 die Wahrscheinlichkeit bestimmbar, dass ein Ereignis, das heisst eine Kombination von LA,LE,HN, eintritt, welches in diese Klasse 51 gehört.

In der Betriebsphase wird nun nach der Messung der Betriebsgrössen LA,LE,HN anhand des Histogramms 5 geprüft, wie gross die Wahrscheinlichkeit für diese Kombination der Betriebsgrössen LA,LE,HN ist. Liegt die Wahrscheinlichkeit dieser Kombination unter einer vorgebbaren Grenze, so wird entschieden, dass es sich um einen ungelernten Zustand handelt, der ausserhalb des zulässigen Bereichs von Arbeitspunkten der Anlage 1 liegt. Die nachfolgende Auswertung der Modelle Mi für die Subsysteme 1i wird für diese Messung unterdrückt.

Ferner kann der Bereichstest 21 noch einen Einzelbereichstest umfassen, der ebenfalls dazu dient, Fehlwarnungen zu vermeiden. In diesem Einzelbereichstest wird überprüft, ob die Einzelmessung einer Betriebsgrösse B innerhalb ihres spezifischen Messbereichs liegt, der durch einen Minimal- und einen Maximalwert festgelegt ist. Diese Minimal- und Maximalwerte sind beispielsweise in der Auswerteeinheit gespeichert.

Der Einzelbereichstest wird vor allem verwendet, um zu prüfen, ob eine Messung innerhalb des Messbereiches des Sensors liegt oder ob der gemessene Wert physikalisch möglich ist. Hierdurch lassen sich Fehlfunktionen der Sensoren, die beispielsweise auf einem Kabelbruch beruhen, detektieren. Der Einzelbereichstest kann auch von der übergeordneten Kontrollvorrichtung durchgeführt werden und das Ergebnis an die Auswerteeinheit kommuniziert werden. Für den Einzelbereichstest können auch Überwachungsvorrichtungen für die Sensoren verwendet werden, die in der Anlage 1 bereits vorgesehen sind.

Auch besteht die Möglichkeit im Rahmen des Bereichstests 21 einen Modellbereichstest durchzuführen. Hierzu werden für einzelne oder alle Modelle Arbeitsbereiche festgelegt, und es wird jeweils überprüft ob die Eingangsgrössen des jeweiligen Modells innerhalb des zugehörigen Arbeitsbereichs des Modells liegen.

Der Test 22 (siehe Fig. 2) der Vorprüfung 2 dient dazu, die Umgebungsgrössen U auf Störungsfreiheit zu überprüfen. Dieser Test 22 wird vorzugsweise durch redundante Messung der Umgebungsgrössen U realisiert, beispielsweise, indem eine Umgebungsgrösse U mit mehreren, voneinader unabhängigen Sensoren bestimmt wird. Ferner kann der Test 22 für die Umgebungsgrössen U auch Einzelbereichtests umfassen - analog wie sie vorangehend beschrieben sind - wobei geprüft wird, ob die jeweils erfassten Messwerte physikalisch sinnvoll sind und/oder innerhalb eines spezifischen Messbereichs liegen.

Ausser den vorangehend beschriebenen Komponenten können in der Vorprüfung 2 auch noch weitere Komponenten implementiert sein wie beispielsweise Eingangsfilter zum Filtern der Eingangsgrössen und/oder Residuenfilter zur Filterung der Residuen. Ferner können die verschiedenen Modelle, die anhand der in der Lernphase erfassten Messwerte erstellt werden, bei ihrer Erstellung auf Instabilität überprüft werden. Dies kann beispielsweise erfolgen, indem die Lage der Polstellen der Übertragungsfunktion des jeweiligen Modells untersucht wird. Natürlich sind auch andere, an sich bekannte Stabilitätstests für die verschiedenen Modelle anwendbar.

Im Rahmen des erfindungsgemässen Verfahrens können auch jeweils die Messwerte für die Bauteilgrössen S1,...,SN, welche spezifisch für die Subsysteme 11,...,1N sind, geprüft werden, ob sie innerhalb ihres spezifischen Messbereichs liegen bzw. physikalisch sinnvoll sind. Dadurch lassen sich beispielsweise Fehler an den Sensoren, mit denen die Messwerte für die Bauteilgrössen S1,...,SN ermittelt werden, detektieren und lokalisieren.

Im Folgenden wird nun die Überwachung der Anlage 1 mit dem hier beschriebenen Ausführungsbeispiel des erfindungsgemässen Verfahrens erläutert. Dabei wird nur noch auf die Betriebsphase Bezug genommen, das heisst, die Lernphase ist abgeschlossen und die verschiedenen Modelle Mi, MA, ME sind erstellt und optimiert. Bei diesem Ausführungsbeispiel lernen die Modelle Mi,MA,ME während der Betriebsphase nicht mehr.

Während der Betriebsphase der Anlage 1 werden für die Prozessgrössen B,U,S1,...,SN in vorgebbaren zeitlichen Abständen jeweils Messwerte erfasst. Diese werden mit Modellwerten oder mit Maschinenmodellwerten verglichen, um daraus die aktuellen Werte für die Überwachungsgrössen zu ermitteln. Vorzugsweise werden mehrere Überwachungsgrössen bestimmt, die jeweils ein Residuum sind, welches die Abweichung des Modellwerts oder des Maschinenmodellwerts von dem ihm entsprechenden aktuellen Messwert angibt.

Bei dem hier beschriebenen Ausführungsbeispiel sind die Residuen, die als Überwachungsgrössen dienen, die Residuen $Ri_k$ (i=1,2,...,N), die sich aus dem Vergleich der mittels der Modelle Mi für die Subsysteme 11,...,1N ermittelten Modellwerte $Yi_k$ und dem entsprechenden Messwert für die Bauteilgrösse $Si_k$ ergeben. Der Index k indiziert dabei diejenige Bauteilgrösse $Si_k$ von den Bauteilgrössen Si des Subsystems 1i, für welche das Residuum $Ri_k$ bestimmt wird, die also Ausgangsgrösse des Modells Mi für das Subsystem 1i ist. Ferner dienen das Residuum oder die Residuen RA, die im Rahmen der Vorprüfung 2 mit Hilfe des Maschinenmodells MA bzw. des Modells ME ermittelt werden, und die Differenz zwischen dem Maschinenmodellwert YA und dem Messwert für die entsprechende Betriebsgrösse B angeben, als Überwachungsgrössen. Wie vorne bereits erläutert, sind für die Turbine mit Generator die Betriebsgrössen B, welche mit Maschinenmodellen MA überwacht werden, vorzugsweise die Differenz DP zwischen dem Ist-Wert PI und dem Soll-Wert PS der elektrischen Klemmenleistung P sowie die Differenz zwischen dem Ist-Wert und dem Soll-Wert des Durchflusses Q.

Da die Modelle Mi, MA, ME so konzipiert sind, dass sie die Arbeitspunktänderungen der Anlage 1 mitmachen, sind die Überwachungsgrössen $Ri_k$ und RA unabhängig vom jeweils aktuellen Arbeitspunkt.

Nachdem für die Prozessgrössen B,U,S1,...,SN die aktuellen Messwerte ermittelt sind, wird zunächst in der Vorprüfung 2 wie vorne beschrieben überprüft, ob die Messwerte für die Prozessgrössen B,U,S1,...,SN innerhalb ihres jeweils spezifischen Messbereichs liegen und physikalisch sinnvoll sind. Für die Umgebungsgrössen U wird geprüft, ob die redundanten Messungen miteinander kompatibel sind (Test 22, Fig. 3). Es wird ferner geprüft, ob die Betriebsgrössen innerhalb des in der Lernphase erlernten Bereichs von Arbeitspunkten liegen (Bereichstest 21, Fig. 3). Dann werden mit Hilfe des Maschinenmodells MA das Residuum oder die Residuen RA bestimmt.

Erst wenn die Vorprüfung 2 abgeschlossen ist, werden die Modelle Mi für die Subsysteme 1i ausgewertet. Dabei werden nur solche Modelle Mi zugelassen bzw. berücksichtigt, welche ausschliesslich störungsfreie Umgebungsgrössen U und Betriebsgrössen B oder bereits validierte, das heisst als fehlerfrei klassifizierte, Bauteilgrössen S1,..., SN als Eingangsgrössen haben. Mit diesen Modellen Mi werden dann die Residuen $Ri_k$ ermittelt. Somit ist sichergestellt, dass das ermittelte Residuum $Ri_k$ frei von Einflüssen möglicher Störungen der Eingangsgrössen des Modells Mi ist. Somit kann ein anormaler Verlauf des Residuums $Ri_k$ eindeutig einer möglichen Störung der Ausgangsgrösse des Modells Mi - also einer Bauteilgrösse Si zugeschrieben werden. Auf diese Weise wird die Lokalisierung von Störungen in erheblichem Masse vereinfacht.

Im Folgenden wird nun eine bevorzugte Ausführung des Überwachungskonzepts beschrieben, welche insbesondere auch für die Störungsfrüherkennung und die Wartungsplanung geeignet ist. Dabei werden für die Überwachung mehrere Kategorien verwendet, in welche die Prozessgrössen jeweils in Abhängigkeit ihres aktuellen Wertes bzw. des aktuellen Wertes des zugehörigen Residuums eingeteilt werden können. Es sind zumindest eine Kategorie OK für den normalen Betriebszustand, eine Kategorie EW für eine Frühwarnung, eine Kategorie WW für eine Verschleisswarnung, eine Kategorie UN für unbekannte Zustände und eine Kategorie SW für eine Signalwarnung vorgesehen.

Für jedes der Residuen $Ri_k$, RA wird jeweils ein Vertrauensbereich festgelegt, das heisst es werden Schwellenwerte für die Residuen $Ri_k$, RA bestimmt, bei deren Über- oder Unterschreitung das zugehörige Residuum als nicht mehr normal beurteilt wird. Diese Vertrauensbereiche bzw. Schwellenwerte werden vorzugsweise anhand derjenigen Residuen oder deren Schwankungen festgelegt, die für das zugehörige Modell Mi, MA, ME in der Lernphase bestimmt wurden, denn die in der Lernphase ermittelten Residuen bzw. deren Schwankungen stellen ein typisches Mass dafür dar, wie stark die Abweichungen des Modellwerts $Yi_k$ oder des Maschinenmodellwerts YA vom entsprechenden Messwert im normalen, störungsfreien Betriebszustand sind. Beispielsweise kann der Schwellenwert für das Residuum $Ri_k$, RA gleich oder etwas grösser gewählt werden als das grösste der Residuen, die in der Lernphase für das entsprechende Modell Mi, ME ermittelt wurden.

Wird, beispielsweise im Rahmen der Vorprüfung 2, festgestellt oder von der übergeordneten Kontrollvorrichtung mitgeteilt, dass der aktuelle Messwert für eine Prozessgrösse B,U,S1,...,SN ausserhalb des jeweils spezifischen Messbereichs liegt oder physikalisch nicht sinnvoll ist, so wird die entsprechende Prozessgrösse B,U,S1 ,...,SN in die Kategorie SW für die Signalwarnung eingestuft, eine Signalwarnung für diese Prozessgrösse gespeichert und auf der Ausgabeeinheit 4 (Fig. 1) sichtbar gemacht. Sämtliche Modelle MA,ME oder Mi, für welche die fehlerbehaftete Prozessgrösse Eingangsgrösse ist, werden in diesem Zyklus ignoriert, das heisst nicht mehr ausgewertet.

Die Kategorie UN für unbekannte Zustände kennzeichnet einen solchen Zustand, bei dem wegen zu grosser Unsicherheit bezüglich der Aussagekraft der Residuen $Ri_k$, RA auf eine Auswertung des entsprechenden Residuums verzichtet wird. Die Kategorie UN wird in den folgenden Fällen gewählt: Eine der Eingangsgrössen eines Modells Mi wird im Rahmen der Vorprüfung 2 in die Kategorie EW (siehe weiter hinten) eingeordnet; oder während der Vorprüfung 2 wird detektiert, dass die redundanten Messungen für eine oder mehrere der Umgebungsgrössen U nicht kompatibel miteinader sind; oder der Bereichstest 21 ergibt, dass Betriebsgrössen B oder Kombinationen von Betriebsgrössen B nicht innerhalb des in der Lernphase erlernten Bereichs von Arbeitspunkten liegen. Wird während eines Zyklus eine Prozessgrösse in die Kategorie UN eingestuft, so werden sämtliche Modelle MA,ME oder Mi, für welche diese fehlerbehaftete Prozessgrösse Eingangsgrösse ist, in diesem Zyklus ignoriert, das heisst nicht mehr ausgewertet. Falls eine Prozessgrösse in die Kategorie UN eingeordnet wird, so wird dies gespeichert und auf der Ausgabeeinheit 4 (Fig. 1) sichtbar gemacht.

Die Kategorie EW für Frühwarnung wird gewählt, wenn ein Residuum $Ri_k$ oder RA ausserhalb seines Vertrauensbereiches liegt. Dies kann mehrere Ursachen haben: Es kann beispielsweise ein Sensorschaden vorliegen oder es kann sich um einen plötzlich aufgetretenen Schaden handeln, oder es kann sich um eine langsam fortschreitende Veränderung handeln, wie sie beispielsweise durch Verschleiss oder Abnutzung verursacht wird. Letzteres macht sich durch eine vergleichsweise langsame und kontinuierliche Veränderung im zeitlichen Verlauf des entsprechenden Residuums RA oder $Ri_k$ bemerkbar und kann daher gut von plötzlich auftretenden Schäden oder Fehlern unterschieden werden. Falls eine langsam fortschreitende Veränderung die Ursache für das Verlassen des Vertrauensbereichs ist, so hat das Bedienpersonal die Möglichkeit, den Vertrauensbereich für das entsprechende Residuum RA oder $Ri_k$ anzuheben bzw. zu vergrössern. Diese Massnahme hat automatisch zur Folge, dass diejenige Prozessgrösse, welche durch dieses Residuum RA oder $Ri_k$ überwacht wird, in die Kategorie WW für Verschleisswarnung eingeordnet wird. Liegt das Residuum nach dem Anheben des Vertrauensbereichs innerhalb des neuen Vertrauensbereichs, so bleibt die zugehörige Prozessgrösse in der Kategorie WW. Nach einer vom Verschleiss abhängigen Zeitdauer wird diese Prozessgrösse wieder in die Kategorie EW fallen, wodurch das Personal auf den sich verschlimmernden Verschleiss hingewiesen wird. Die Kategorie WW wird in der Lernphase nicht verwendet. Das Auftreten der Kategorien EW und WW für eine Prozessgrösse wird gespeichert und auf der Ausgabeeinheit 4 sichtbar gemacht. Zudem wird das Auftreten der Kategorie WW noch separat gespeichert, sodass beim erneuten Auftreten der Kategorie EW feststellbar ist, ob für das entsprechende Residuum der Vertrauensbereich schon einmal geändert worden ist.

Die Schwellenwerte für die Kategorie EW werden vorzugsweise so gewählt, dass sie weit unterhalb einer kritischen Grenze liegen, bei deren Überschreitung ernsthafte Schäden resultieren können.

Diejenigen Prozessgrössen B,U,S1,...,SN die in keine der Kategorien SW,UN,EW oder WW gehören, werden in die Kategorie OK für den normalen Betriebszustand eingeordnet. Das ist beispielsweise der Fall, wenn das Residuum $Ri_k$, mit welchem die Bauteilgrösse $Si_k$ überwacht wird, innerhalb seines Vertrauensbereichs liegt, und zudem während der Vorprüfung 2 kein Fehler aufgetreten ist und das oder die Residuen RA für diejenigen Betriebsgrössen B, welche Eingangsgrössen für das zu $Si_k$ gehörende Modell Mi sind, innerhalb ihres Vertrauensbereichs liegen. Auch das Auftreten der Kategorie OK wird gespeichert und auf der Ausgabeeinheit 4 sichtbar gemacht.

Das Überwachungskonzept mit den verschiedenen Kategorien, insbesondere mit den Kategorien EW und WW hat den Vorteil, dass Verschleisserscheinungen bereits in einem sehr frühen Stadium erkennbar sind und somit Wartungs- oder Unterhaltsarbeiten rechtzeitg geplant und organisiert werden können.

Die Wahl der geeigneten Prozessgrössen sowie die Auswahl der Eingangs- und Ausgangsgrössen der verschiedenen Modelle für das erfindungsgemässe Verfahren hängt von der jeweiligen Anlage ab, welche überwacht werden soll. Es obliegt der Erfahrung des Fachmanns, für den jeweiligen Anwendungsfall die geeigneten Prozessgrössen zu wählen.

**Patentansprüche**

1. Verfahren zum Überwachen einer Anlage mit mehreren Subsystemen, die an variablen Arbeitspunkten betreibbar ist, mit den folgenden Schritten:

   a) während des Betriebs der Anlage (1) werden für einen festgelegten Satz von Prozessgrössen (B,U,S1,..., SN) in vorgebbaren zeitlichen Abständen jeweils Messwerte erfasst,
   b) die in einer Lernphase für verschiedene Arbeitspunkte erfassten Messwerte werden zur Erstellung von Modellen (M1,M2,...,MN) für das Betriebsverhalten der Subsysteme (11,12,...,1N) herangezogen, wobei die Eingangsgrössen jedes Modells (M1,M2,...,MN) zumindest ein Teil der Prozessgrössen (B,U,S1,...,SN) sind und die Ausgangsgrösse jedes Modells einen Modellwert $(Yi,Yi_k)$ für mindestens eine der Prozessgrössen umfasst, und wobei die Modelle (M1,M2,...,MN) durch Vergleichen der Modellwerte mit den Messwerten optimiert werden,
   c) in einer Betriebsphase wird mit Hilfe der Modelle (M1,M2,...,MN) in vorgebbaren zeitlichen Abständen zumindest eine Überwachungsgrösse $(Ri,Ri_k)$ bestimmt, die unabhängig vom jeweils aktuellen Arbeitspunkt ist,
   d) der zeitliche Verlauf der Überwachungsgrösse $(Ri,Ri_k)$ wird zur Überwachung der Anlage (1) herangezogen,

   **dadurch gekennzeichnet, dass** vor dem Bestimmen der Überwachungsgrösse $(Ri,Ri_k)$ eine Vorprüfung (2) durchgeführt wird, in welcher überprüft wird, ob zumindest die Messwerte für diejenigen Prozessgrössen, die Betriebsgrössen (B) sind, innerhalb eines vorgegebenen Bereichs liegen.

2. Verfahren nach Anspruch 1, bei welchem für die Vorprüfung (2) ein Maschinenmodell (MA) bestimmt wird, dessen Eingangsgrössen Betriebsgrössen (B) sind und dessen Ausgangsgrössen einen Maschinenmodellwert (YA) für mindestens eine der Betriebsgrössen (B) umfassen.

3. Verfahren nach Anspruch 2, bei welchem das Maschinenmodell (MA) mindestens ein Modell (ME) umfasst, mit welchem ein Maschinenmodellwert (YA) für die Abweichung (DP;DQ) des Messwerts (PI;QI) für eine Betriebsgrösse (P;Q) von einem theoretisch ermittelten Soll-Wert (PS;QS) für diese Betriebsgrösse (P;Q) bestimmt wird.

4. Verfahren nach Anspruch 3, bei welchem das Modell (ME) für die Abweichung (DP;DQ) des Messwerts (PI,QI) von dem theoretisch ermittelten Soll-Wert (PS;QS) ein experimentelles Modell ist, welches anhand der in der Lernphase erfassten Messwerte erstellt und optimiert wird.

5. Verfahren nach einem der Ansprüche 2-4, bei welchem das Maschinenmodell (MA) anhand der Messwerte erstellt wird, die in der Lernphase für verschiedene Arbeitspunkte erfasst werden, wobei durch Vergleichen des Maschinenmodellwerts (YA) mit dem ihm entsprechenden tatsächlichen Messwert eine Abweichungsgrösse bestimmt wird, und Modellparameter des Maschinenmodells (MA) so optimiert werden, dass ein aus den Abweichungsgrössen bestimmbarer Modellfehler minimal wird.

6. Verfahren nach einem der Ansprüche 2-5, bei welchem während der Betriebsphase durch einen Vergleich des Maschinenmodellwerts (YA) mit dem entsprechenden aktuellen Messwert dieser Betriebsgrösse (B) ein Residuum (RA) für die Anlage bestimmt wird.

7. Verfahren nach einem der vorangehenden Ansprüche, bei welchem während der Vorprüfung (2) die Umgebungsgrössen auf Störungsfreiheit überprüft werden.

8. Verfahren nach einem der vorangehenden Ansprüche, bei welchem die Vorprüfung (2) einen Bereichstest (21) umfasst, in welchem überprüft wird, ob einzelne oder Kombinationen von Betriebsgrössen (B) innerhalb des in der Lernphase erlernten Bereichs von Arbeitspunkten liegen.

9. Verfahren nach Anspruch 8, bei welchem der Bereichstest (21) anhand eines Histogramms (5) erfolgt, welches anhand der in der Lernphase erfassten Messwerte erstellt wird.

10. Verfahren nach einem der vorangehenden Ansprüche, bei welchem mehrere Überwachungsgrössen bestimmt werden, die jeweils ein Residuum (Ri,$Ri_k$,RA) sind, welches die Abweichung eines Modellwerts (Yi,$Yi_k$) oder eines Maschinenmodellwerts (YA) von dem ihm entsprechenden aktuellen Messwert angibt.

11. Verfahren nach einem der vorangehenden Ansprüche, bei welchem für die Überwachung mehrere Kategorien verwendet werden, in welche die Prozessgrössen jeweils in Abhängigkeit ihres aktuellen Wertes eingeteilt werden können, wobei zumindest eine Kategorie für den normalen Betriebszustand, eine Kategorie für eine Frühwarnung, eine Kategorie für eine Verschleisswarnung, eine Kategorie für unbekannte Zustände und und eine Kategorie für eine Signalwarnung vorgesehen sind.

12. Verfahren nach einem der vorangehenden Ansprüche, wobei mindestens für eine Überwachungsgrösse (Ri,$Ri_k$, RA) ein Vertrauensbereich festgelegt wird, dieser Vertrauensbereich vergrössert werden kann, wenn die Überwachungsgrösse (Ri,$Ri_k$,RA) den ursprünglichen Vertrauensbereich verlässt, und die Vergrösserung des Vertrauensbereichs registriert wird.

## Claims

1. A method for the monitoring of a plant having a plurality of sub-systems which is operable at variable working points and comprising the following steps:

   a) respective measured values are detected for a fixed set of process parameters (B, U, S1, ..., SN) at pre-settable time intervals during the operation of the plant (1);
   b) the measured values detected in a learning phase for different working points are used to prepare models (M1, M2, ..., MN) for the operating characteristics of the sub-systems (11, 12, ..., 1N), with the input values of each model (M1, M2, ..., MN) being at least a part of the process parameters (B, U, S1, ..., SN) and the output value of each model comprising a model value (Yi, $Yi_k$) for at least one of the process parameters, and with the models (M1, M2, ..., MN) being optimised by comparing the model values with the measured values;
   c) at least one monitoring parameter (Ri, $Ri_k$), which is independent of the respective current working point, is determined at pre-settable time intervals in an operating phase with the aid of the models (M1, M2, ..., MN);
   d) the time-dependent course of the monitoring parameter (Ri, $Ri_k$) is used for the monitoring of the plant (1);

   **characterised in that** a pre-check (2) is carried out prior to the determination of the monitoring parameter (Ri, $Ri_k$), in which a check is made whether at least the measured values for those process parameters which are operating parameters (B) lie within a predetermined range.

**EP 1 189 126 B1**

2. A method in accordance with claim 1 wherein a machine model (MA) is determined for the pre-check (2), the input values of said machine model (MA) being operating parameters (B) and its output values comprising a machine model value (YA) for at least one of the operating parameters (B).

3. A method in accordance with claim 2 wherein the machine model (MA) comprises at least one model (ME) with which a machine model value (YA) is determined for the deviation (DP;DQ) of the measured value (PI;PQ) for an operating parameter (P;Q) from a theoretically determined desired value (PS; QS) for this operating parameter (P;Q).

4. A method in accordance with claim 3 wherein the model (ME) for the deviation (DP;DQ) of the measured value (PI; PQ) from the theoretically determined desired value (PS;QS) is an experimental model, which is prepared and optimised on the basis of the measured values detected in the learning phase.

5. A method in accordance with one of the claims 2-4 wherein the machine model (MA) is prepared using the measured values detected in the learning phase for different working points, with a deviation value being determined by comparing the machine model value (YA) with the actual measured value corresponding thereto, and model parameters of the machine model (MA) being optimised such that a model error determinable from the deviation values becomes minimal.

6. A method in accordance with one of the claims 2-5 wherein a residual value (RA) is determined for the plant during the operating phase by a comparison of the machine model value (YA) with the corresponding current measured value of this operating parameter (B).

7. A method in accordance with one of the preceding claims wherein the environmental parameters are examined for freedom from malfunction during the pre-check (2).

8. A method in accordance with one of the preceding claims wherein the pre-check (2) comprises a range test (21) in which an examination is made as to whether individual operating parameters (B) or combinations of operating parameters (B) are within the range of working points learnt in the learning phase.

9. A method in accordance with claim 8 wherein the range test (21) is carried out by means of a histogram (5) which is prepared using the measured values detected in the learning phase.

10. A method in accordance with one of the preceding claims wherein a plurality of monitoring parameters is determined, each of which is a residual value (Ri, $Ri_k$, RA) which identifies the deviation of a model value (Yi, $Yi_k$) or of a machine model value (YA) from the current measured value corresponding thereto.

11. A method in accordance with one of the preceding claims wherein a plurality of categories is used for the monitoring, the process parameters being capable of being classified therein in each case in dependence on their current value, with there at least being provided a category for the normal operating state, a category for an early warning, a category for a wear warning, a category for unknown states and a category for a signal warning.

12. A method in accordance with one of the preceding claims wherein a confidence range is fixed at least for one monitoring parameter (Ri, $Ri_k$, RA), said confidence range being able to be extended if the monitoring parameter leaves the original confidence range, and the extension of the confidence range is registered.

**Revendications**

1. Procédé de surveillance d'une installation avec plusieurs sous-systèmes, qui peut être amené à fonctionner à des emplacements de travail variables, comprenant les étapes consistant à:

   a) pendant le fonctionnement de l'installation (1), pour un ensemble déterminé de grandeurs de processus (B, U,S1,... , SN), à chaque fois des valeurs de mesure sont détectées à des intervalles temporaires prédéfinissables,

   b) les valeurs de mesure détectées lors d'une phase d'apprentissage pour différents points de fonctionnement sont utilisées pour établir des modèles (M1,M2,....,MN) pour le comportement en fonctionnement des sous-systèmes (11,12,...,1N), où les grandeurs d'entrée de chaque modèle (M1,M2,...,MN) sont au moins une partie des grandeurs de processus (B,U,S1,...,SN), et la grandeur de sortie de chaque modèle comprend une valeur

13

de modèle (Yi,Yi$_k$) pour au moins l'une des grandeurs de processus, et où les modèles (M1,M2,...,MN) sont optimisés par une comparaison des valeurs de modèle aux valeurs de mesure,

c) lors d'une phase de fonctionnement, avec des modèles (M1,M2,...,MN) à des intervalles temporaires prédéfinissables, au moins une grandeur de surveillance (Ri,Ri$_k$) est déterminée qui est indépendante du point de fonctionnement à chaque fois actuel,

d) le tracé temporaire de la grandeur de surveillance (Ri, Ri$_k$) est utilisé pour surveiller l'installation (1),

**caractérisé en ce qu'**avant la détermination de la grandeur de surveillance (Ri, Ri$_k$), un examen préalable (2) est effectué pendant lequel on surveille si au moins les valeurs de mesure pour les grandeurs de processus, qui sont des grandeurs de fonctionnement (B), se situent à l'intérieur d'une plage prédéfinie.

2. Procédé selon la revendication 1, dans lequel, pour l'examen préalable (2), un modèle de machine (MA) est déterminé, dont les grandeurs d'entrée sont des grandeurs de fonctionnement (B), et dont les grandeurs de sortie comprennent une valeur de modèle de machine (YA) pour au moins l'une des grandeurs de fonctionnement (B).

3. Procédé selon la revendication 2, où le modèle de machine (MA) comprend au moins un modèle (ME) au moyen duquel est définie une valeur de modèle de machine (YA) pour l'écart (DP;DQ) de la valeur de mesure (PI;QI) pour une grandeur de fonctionnement (P;Q) d'une valeur de consigne (PS;QS) déterminée théoriquement de cette grandeur de fonctionnement (P;Q).

4. Procédé selon la revendication 3, où le modèle (ME) pour l'écart (DP;DQ) de la valeur de mesure (PI,QI) de la valeur de consigne (PS;QS) déterminée théoriquement est un modèle expérimental qui est établi et optimisé à l'aide des valeurs de mesure détectées pendant la phase d'apprentissage.

5. Procédé selon l'une des revendications 2 à 4, où le modèle de machine (MA) est établi à l'aide des valeurs de mesure qui sont détectées dans la phase d'apprentissage pour des points de fonctionnement différents, où par une comparaison de la valeur du modèle de machine (YA) à la valeur de mesure effective correspondante, une grandeur d'écart est déterminée, et des paramètres de modèle du modèle de machine (MA) sont optimisés de façon qu'une erreur de modèle définissable à partir des grandeurs d'écart devient minimale.

6. Procédé selon l'une des revendications 2 à 5, où pendant la phase de fonctionnement, par une comparaison de la valeur de modèle de machine (YA) avec la valeur de mesure actuelle correspondante de cette grandeur de fonctionnement (B), un résidu (RA) pour l'installation est déterminé.

7. Procédé selon l'une des revendications précédentes, où pendant l'examen préalable (2), les grandeurs environnantes sont examinées quant à l'absence de perturbations.

8. Procédé selon l'une des revendications précédentes, où l'examen préalable (2) comprend un test de zone (21), pendant lequel on examine si des grandeurs de fonctionnement (B) individuelles ou des combinaisons de celles-ci se situent à l'intérieur de la zone de points de fonctionnement apprise pendant la phase d'apprentissage.

9. Procédé selon la revendication 8, où le test de zone (21) est effectué à l'aide d'un histogramme (5) qui est établi à l'aide des valeurs de mesure détectées pendant la phase d'apprentissage.

10. Procédé selon l'une des revendications précédentes, dans lequel plusieurs grandeurs de surveillance sont déterminées, qui sont respectivement un résidu (Ri, Ri$_k$, Ra) qui indique l'écart d'une valeur de modèle (Yi, Yi$_k$) ou d'une valeur de modèle de machine (YA) de la valeur de mesure actuelle correspondant à celle-ci.

11. Procédé selon l'une des revendications précédentes, dans lequel, pour la surveillance, plusieurs catégories sont utilisées, dans lesquelles les grandeurs de processus, respectivement en fonction de leur valeur actuelle, peuvent être classées, où au moins une catégorie est prévue pour l'état de fonctionnement normal, une catégorie pour un avertissement précoce, une catégorie pour un avertissement d'usure, une catégorie pour des états inconnus et une catégorie pour un avertissement par signaux.

12. Procédé selon l'une des revendications précédentes, où au moins pour une grandeur de surveillance (Ri, Ri$_k$, RA), un domaine de fiabilité est fixé, ce domaine de fiabilité peut être agrandi, lorsque la grandeur de surveillance (Ri, Ri$_k$, RA) quitte le domaine de fiabilité initial et que l'agrandissement du domaine de fiabilité est enregistré.

## Fig.1

# Fig.2

Fig.3

# Fig.4